# EUROPÄISCHE PATENTSCHRIFT

(11) **EP 4 491 295 B1**
(45) Veröffentlichungstag und Bekanntmachung des Hinweises auf die Patenterteilung: **26.08.2026**
(21) Anmeldenummer: 24188101.0
(22) Anmeldetag: 11.07.2024
(51) Int. Cl.: B21F 1/02, F16C 13/00, F16C 13/02

(54) **RICHTROTOR**
STRAIGHTENING ROTOR
ROTOR DE REDRESSAGE

(30) Priorität: 13.07.2023 AT 505522023
(43) Veröffentlichungstag der Anmeldung: 15.01.2025
(73) Patentinhaber: Rapperstorfer, Hubert, 4652 Steinerkirchen an der Traun (AT)
(72) Erfinder: Rapperstorfer, Hubert, 4652 Steinerkirchen an der Traun (AT)
(74) Vertreter: Fabian, Ferdinand

(56) Entgegenhaltungen:
- EP-B1- 0 988 121
- AT-U1- 11 798
- CN-A- 102 777 489
- CN-U- 213 968 402
- CN-U- 217 044 391
- DE-A1- 102004 057 427
- DE-A1- 102007 026 728
- DE-U1- 8 528 959
- JP-A- 2000 005 821

## Beschreibung

Die Erfindung betrifft einen Richtrotor zum Richten von Draht, insbesondere von Baustahldraht, umfassend ein drehbar lagerbares Rotorgehäuse und mehrere in einer Vorschubrichtung des Drahtes hintereinander angeordneten Richtelementeinheiten mit Richtelementen.

Die Richtelementeinheiten umfassen vorzugsweise eine über zumindest ein Lagerelement drehbar gelagerte Richtrolle, wobei das Lagerelement in einer Lageraufnahme angeordnet ist, sowie eine Lagergabel zur Abstützung einer Lagerachse, die sich durch die Richtrolle erstreckt.

Zudem betrifft die Erfindung eine Richtmaschine umfassend zumindest einen Richtrotor mit Richtelementeinheiten.

Das Richten von Draht als Vorstufe der Baustahlbereitstellung, beispielsweise zur Herstellung von Bewehrungen, ist aus dem Stand der Technik bekannt. Im Wesentlichen unterscheidet man hier zwischen der Rollenrichttechnik und der Rotortechnik. Die Erfindung liegt auf dem Gebiet der Rotorrichttechnik.

In der Rotorrichttechnik werden Richtrotoren verwendet, in denen Richtelemente, wie Richtrollen oder Richtdüsen oder Richtsteine eingesetzt sind. Beispielsweise beschreibt die DE 39 10 221 A1 eine Richtmaschine für Draht, insbesondere für Betonstahldraht, der von einem Coil abgezogen, im Durchlauf gerichtet, abgelenkt sowie als gerader Rundstahlstab der weiteren Verarbeitung und/oder Verwendung zugeführt wird, mit zumindest einer Einlaufdüse und zumindest einer Auslaufdüse, die in der Durchlaufachse angeordnet sind, und mit einer Mehrzahl von Richtdüsen, die gegen die Durchlaufachse versetzt sind, wobei zumindest die Richtdüsen in einem Gehäuse angeordnet sind, welches um die Durchlaufachse rotiert, und zumindest die Richtdüsen in Wälzlagern gelagert sind, deren Achse mit der Achse der darin gelagerten Richtdüse übereinstimmt, wobei die Wälzlager zur Aufnahme der axialen Kräfte beim Durchlauf eines zu richtenden Drahtes eingerichtet sind.

Die AT 11 798 U1 beschreibt eine Rotorrichteinheit zum Richten von Baustahldraht, mit wenigstens drei Richtelementen, die in einem drehbar gelagerten Rotorgehäuse bezogen auf die Vorschubrichtung des Baustahldrahtes hintereinander und seitlich versetzt zueinander angeordnet bzw. anordenbar sind, wobei wenigstens ein Richtelement im Betrieb relativ zum Rotorgehäuse feststehend und wenigstens ein Richtelement drehbar im Rotorgehäuse gelagert ist. Es sollen dabei die Vorteile der beiden Welten der Richttechnik miteinander kombiniert werden, sodass der Richtrotor kleiner baut und damit die zu beschleunigende Masse geringer ist. Letzteres ist von Bedeutung, da derartige Baustahldrähte von einem Coil abgewickelt werden und nach dem Richten auf die passende Länge abgelängt werden. Damit ist der Richtrotor einer wiederholenden Brems- und insbesondere Beschleunigungsbewegung unterworfen. Je größer die zu beschleunigende Masse wird, desto größer wird auch der Verschleiß im bzw. am Richtrotor.

Aus der DE 85 28 959 U1 ist eine Vorrichtung zum Richten von auf Rollen gewickeltem Stahldraht, insbesondere Betonstahl, bekannt, mit einem rahmenartigen Gehäuse, einer Ablängeinrichtung und wenigstens einem Richtsatz, der aus mehreren in Flucht hintereinander paarweise angeordneten Draht-Führungsrollen und mehreren entlang der Fluchtachse hintereinander angeordneten Richtorganen besteht, deren Abstand voneinander senkrecht zur Fluchtachse geringer ist als der Drahtdurchmesser und die in einem in der Fluchtachse gelagerten Rotor angeordnet sind, wobei die Richtorgane von Rollen gebildet sind, die wechselweise auf gegenüberliegenden Seiten der Fluchtachse angeordnet und mit ihrer unter einem Winkel zur Fluchtachse verlaufenden Achse in dem Rotor frei drehbar gelagert sind, wobei unmittelbar aufeinander folgende Richtrollen jeweils unter dem Komplementärwinkel angeordnet sind.

Aus der DE 10 2007 026 728 A1 ist ein Richtrotor bekannt, der zwei frei positionierbare Wuchtmittel aufweist, die axial bezüglich einer Drehachse des Richtrotors im Wesentlichen symmetrisch zu einer Mittelebene angeordnet sind, um damit den Richtrotor mit höheren Drehzahlen betreiben zu können.

Die DE 10 2013 201 551 B3 beschreibt eine Richtmaschine für Draht, mit einem verdrehbaren Richtkörper, in dem Richtbacken sitzen, von denen zumindest einige radial verstellbar sind mittels axial verschieblicher Keilflächen, die in Wirkeingriff mit zugeordneten Steuerflächen an den radialen Außenseiten der Richtbacken oder zwischengeschalteter Beilagekörper stehen, wobei der Richtkörper von einer ihn umschließenden, relativ zu ihm axial verschieblichen Manschette umgeben ist, die ein Unterteil und einen dieses verschließbaren Deckel umfasst, wobei die Keilflächen am Unterteil und am Deckel ausgebildet sind, über zugeordnete Öffnungen, in diesen axial verstellbar, in den Richtkörper hineinragen und dort in Wirkeingriff mit den Steuerflächen der Richtbacken oder deren Beilagekörpern stehen.

Die JP 2000 005821 A offenbart einen Richtrotor, welcher die Basis für den Oberbegriff des Anspruchs 1 bildet.

Der vorliegenden Erfindung liegt die Aufgabe zu Grunde, einen Draht mit verbesserter Verschleißbeständigkeit der Maschine richten zu können.

Die Aufgabe wird mit dem eingangs genanntem Richtrotor dadurch gelöst, dass das Rotorgehäuse aus einer ersten Rotorplatte und einer zweiten Rotorplatte sowie mehreren Distanzelementen zur voneinander distanzierten Anordnung der ersten und der zweiten Rotorplatte zusammengesetzt ist, wobei die Richtelementeinheiten zumindest teilweise zwischen der ersten und der zweiten Rotorplatte angeordnet und damit verbunden sind.

Zudem wird die Aufgabe der Erfindung mit der eingangs genannten Richtmaschine gelöst, die den erfindungsgemäßen Richtrotor aufweist.

Von Vorteil ist dabei, dass durch die Ausbildung des Rotorgehäuses mit den Rotorplatten, die durch die Distanzelemente voneinander distanziert sind, im Vergleich zu bekannten und in der Industrie eingesetzten Rotorgehäusen das Gewicht des Richtrotors reduziert werden kann. Derzeit üblicherweise in Verwendung sind Rotorgehäuse, die einteilig als gefräste Blöcke ausgebildet sind. Im Vergleich damit kann mit dem Rotorgehäuse mit den zwei Platten eine deutliche Gewichtsreduktion erreicht werden. In der Folge ist damit die zu beschleunigende Masse des Richtrotors geringer, womit auch die auf Bestandteile des Richtrotors, wie beispielsweise Lagerelemente, einwirkenden Kräfte und Momente reduziert werden können. Dies wiederum verbessert das Verschleißverhalten des Richtrotors, womit Verschleißerscheinungen reduziert werden können. Unterstützend wirkt sich dabei die Verwendung von selbstschmierenden Lagerelementen in den Richtelementeinheiten aus. Die Verwendung von dauergeschmierten Lagerelementen hat zudem den Vorteil, dass Verschmutzungen im Richtrotor und in weiterer Folge in der Richtmaschine und deren Umgebung durch Fette und Öle aus Lagerelementen aufgrund der auftretenden Fliehkräfte vermieden werden. Somit kann auch eine Verschmutzung der gerichteten Drähte durch Fette und Öle, die insbesondere bei Baustahlprodukten eine negative Folge haben kann, vermieden werden. Darüber hinaus kann damit der Wartungsaufwand reduziert werden. Durch das geringere Gewicht des Richtrotors kann auch die Präzision der Bewegung bzw. des Bewegungsablaufs beim Richten und Ablängen von gerichteten Drähten verbessert werden.

Zur weiteren Gewichtsreduktion des Richtrotors kann nach Ausführungsvarianten der Erfindung vorgesehen sein, dass die erste und/oder die zweite Rotorplatte in Befestigungsabschnitten, in denen die Richtelementeinheiten befestigt sind, eine kleinere Breite aufweisen als in daran anschließenden Abschnitten und/oder dass die erste und/oder die zweite Rotorplatte im Bereich der Richtelemente mit einem Durchbruch versehen sind und/oder dass die Richtelemente über eine äußere Oberfläche der ersten oder der zweiten Rotorplatte vorragend ausgebildet sind, wodurch die Länge der Distanzelemente reduziert werden kann.

Gemäß einer weiteren Ausführungsvariante der Erfindung kann vorgesehen sein, dass die Richtelemente durch Richtrollen, insbesondere hyperbolische Richtrollen, gebildet sind, um damit einerseits den Verschleiß an den Richtelementen zu reduzieren (verglichen mit Richtdüsen oder Richtsteinen), und andererseits den Draht schonender richten zu können.

Ein vereinfachter Aufbau und damit auch eine Gewichtsreduktion ist erreichbar, wenn die Richtelementeinheiten entsprechend einer Ausführungsvariante der Erfindung jeweils ausschließlich nur eine Richtrolle aufweisen, also der Draht nicht zwischen zwei unmittelbar einander gegenüberliegend angeordneten Richtrollen durchgeführt wird.

Zur Verlängerung der Weglänge des Drahtes auf den Richtrollen und damit zu einer möglichen Reduktion der notwendigen Richtkraft kann nach einer Ausführungsvariante der Erfindung vorgesehen sein, dass Achsen der Richtrollen schräg zur Durchlaufrichtung des Drahtes angeordnet sind. Auch diese Maßnahme trägt zur Reduktion von Verschleiß am Richtrotor bei. Zudem kann damit, ohne weitere Maßnahmen setzen zu müssen, der Draht in der Vorschubrichtung vorgeschoben oder von der Drahtabspuleinrichtung abgezogen werden.

Nach einer anderen Ausführungsvariante der Erfindung kann vorgesehen sein, dass ein Winkel der Schrägstellung der Achsen der Rotorrollen ausschließlich über Schrauben festgelegt wird. Es kann also auf einen Stift, wie er nachstehend noch beschrieben wird, verzichtet werden, womit wiederum das Rotorgewicht reduziert werden kann.

Erfindungsgemäß ist zur Gewichtsreduktion vorgesehen, dass die Distanzelemente durch Distanzsäulen gebildet sind. Es ist damit eine käfigartige Ausbildung des Richtrotorgehäuses möglich.

Nach einer anderen Ausführungsvariante der Erfindung kann vorgesehen sein, dass die Distanzelemente einen ersten Endabschnitt, einen zweiten Endabschnitt und einen Mittenabschnitt aufweisen, wobei eine Querschnittsfläche des Mittenbereichs kleiner ist als eine Querschnittsfläche des ersten Endabschnitts und/oder eine Querschnittsfläche des zweiten Endabschnitts. Durch die Verjüngung der Distanzelemente im Mittenbereich kann das Gewicht der Distanzelemente reduziert werden. Andererseits kann mit den im Vergleich dazu größeren Endbereichen die stabilisierende Wirkung der Distanzelemente verbessert werden.

Zur besseren Wartbarkeit und Austauschbarkeit von Komponenten des Richtrotors kann nach einer Ausführungsvariante der Erfindung vorgesehen sein, dass die Distanzelemente mit Befestigungselementen mit der ersten und zweiten Rotorplatte verbunden sind.

Dabei kann nach einer Ausführungsvariante dazu vorgesehen sein, dass die Distanzelemente hülsenförmig ausgebildet sind, womit die Anordnung der Befestigungselemente vereinfacht werden kann.

Es kann dabei entsprechend einer Ausführungsvariante der Erfindung weiter vorgesehen werden, dass sich die Befestigungselemente durchgehend durch die hülsenförmigen Distanzelemente erstrecken, womit die mechanische Belastbarkeit der Verbindung der Distanzelemente mit den Rotorplatten verbessert werden kann.

Ebenfalls zur Reduktion von Verschleißerscheinungen, insbesondere in Lagerelementen des Richtrotors, kann gemäß einer anderen Ausführungsvariante der Erfindung vorgesehen sein, dass zwischen der ersten Rotorplatte oder der zweiten Rotorplatte und zumindest einer der Richtelementeinheiten zumindest ein Wuchtgewicht angeordnet ist, wobei durch diese Art der Platzierung der Wuchtgewichte deren Anordnung und das Auswuchten des Richtrotors vereinfacht werden kann. Die Wuchtgewichte sind dabei auch besser vor Verlust im Betrieb des Richtrotors geschützt.

Nach einer weiteren Ausführungsvariante der Erfindung kann vorgesehen sein, dass die Richtrolle einen Außendurchmesser an der Stelle mit dem kleinsten Außendurchmesser von maximal 70 mm aufweist. Überraschenderweise konnte festgestellt werden, dass mit den im Vergleich zu Anlagen aus dem Stand der Technik kleineren Richtrollen keine höheren Verschleißwerte auftreten. Die Reduktion der Rollengröße hat jedoch den Vorteil, dass die Richtrollen ein geringeres Gewicht aufweisen, womit die Massenträgheit beim Beschleunigen der Richtrollen reduziert werden kann. Zudem sind damit höhere Geschwindigkeiten während des Richtens erzielbar.

Für eine längere Standzeit der dauergeschmierten Lagerelemente ist es nach einer Ausführungsvariante der Erfindung von Vorteil, wenn zwischen der Richtrolle und der Lagerachse zwei oder drei Lagerelemente, insbesondere Wälzlager, angeordnet sind.

Dabei kann es für das Einpressen der Lagerelemente in die Lageraufnahmen der Richtelemente von Vorteil sein, wenn entsprechend einer Ausführungsvariante der Erfindung in der Lageraufnahme ein Ringsteg angeordnet ist, an den sich die Lagerelemente stirnseitig anlegen können.

Gemäß einer anderen Ausführungsvariante der Erfindung kann vorgesehen sein, dass zumindest ein Lagerelement in der Axialrichtung über die Richtrolle vorragend angeordnet ist. Durch die Reduktion der axialen Breite der Richtrolle (im Vergleich zur axialen Breite des Lagerelements oder der Summe der axialen Breiten der Lagerelemente) kann eine weitere Gewichtsreduktion erreicht werden, womit voranstehende Effekte weiter verbessert werden können.

Die Gabel der Richtelementeinheit kann nach einer Ausführungsvariante der Erfindung mehrteilig ausgebildet sein, umfassend ein Fußelement und zwei säulenförmige Augenschrauben oder Augenmuttern, die mit dem Fußelement verbunden sind. Es ist damit eine Ausbildung der Richtelementeinheit mit kleineren Toleranzen einfacher realisierbar, womit die Präzision des Laufs der Richtrollen und in weiterer Folge des Richtrotors verbessert werden kann.

Für einen einfacheren (Wieder-)Zusammenbau des Richtrotors kann entsprechend einer Ausführungsvariante der Erfindung vorgesehen sein, dass das Fußelement eine Ausnehmung zur Aufnahme eines Stiftes aufweist, der sich bis in die erste oder die zweite Rotorplatte des erfindungsgemäßen Richtrotors erstreckt. Durch die einfachere und genaue Positionierung der Richtelementeinheit im Richtrotor kann dessen Laufpräzision verbessert werden.

Für eine bessere Abstimmung der Richtelementeinheit auf einen gewichtsreduzierten Richtrotor kann nach einer weiteren Ausführungsvariante der Erfindung vorgesehen sein, dass das Fußelement als Fußplatte mit zumindest annähernd runden, elliptischen oder polygonalen Stirnflächen ausgebildet ist.

Zur Reduktion von Reibungswärme zwischen der Richtrollt und dem zu richtenden Draht kann bei einer Ausführungsvariante der Erfindung eine äußere Mantelfläche der Richtrolle mit einer den Schlupf zwischen dem Draht und der Mantelfläche reduzierenden Beschichtung, insbesondere einer PVD-Beschichtung, versehen sein.

Zum besseren Verständnis der Erfindung wird diese anhand der nachfolgenden Figur näher erläutert.

Es zeigen jeweils in vereinfachter, schematischer Darstellung:
- Fig. 1: Eine Ausführungsvariante eines Richtrotors in Seitenansicht;
- Fig. 2: Den Richtrotor nach Fig. 1 in Draufsicht;
- Fig. 3: Eine erste Rotorplatte des Richtrotors nach Fig. 1 und 2 in Draufsicht;
- Fig. 4: Eine zweite Rotorplatte des Richtrotors nach Fig. 1 und 2 in Draufsicht;
- Fig. 5: Ein Distanzelement des Richtrotors nach den Fig. 1 und 2 in Schrägansicht;
- Fig. 6: Ein Rotoreinlaufelement für den Richtrotor nach den Fig. 1 und 2 in Schrägansicht;
- Fig. 7: Ein Rotorauslaufelement für den Richtrotor nach den Fig. 1 und 2 in Schrägansicht;
- Fig. 8: Eine Einlaufbuchse für den Richtrotor nach den Fig. 1 und 2 in Schrägansicht;
- Fig. 9: Eine Ausführungsvariante einer Richtelementeinheit in Seitenansicht;
- Fig. 10: Die Richtelementeinheit nach Fig. 9 in Frontansicht;
- Fig. 11: Die Richtelementeinheit nach den Fig. 9 und 10 im Schnitt;
- Fig. 12: Ein Fußelement der Richtelementeinheit nach den Fig. 9 und 10 in Draufsicht;
- Fig. 13: Eine Ausführungsvariante eine Fußelements in Schrägansicht;
- Fig. 14: Eine Ausführungsvariante eines Achsenhalteelementes der Richtelementeinheit nach den Fig. 9 und 10 in Schrägansicht;
- Fig. 15: Eine Ausführungsvariante einer Achse der Richtelementeinheit nach den Fig. 9 und 10 in Seitenansicht;
- Fig. 16: Eine Ausführungsvariante einer Richtrolle in Draufsicht;
- Fig. 17: Eine andere Ausführungsvariante einer Richtrolle in Draufsicht;
- Fig. 18: Eine Ausführungsvariante eines Höheneinstellelementes in Schrägansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

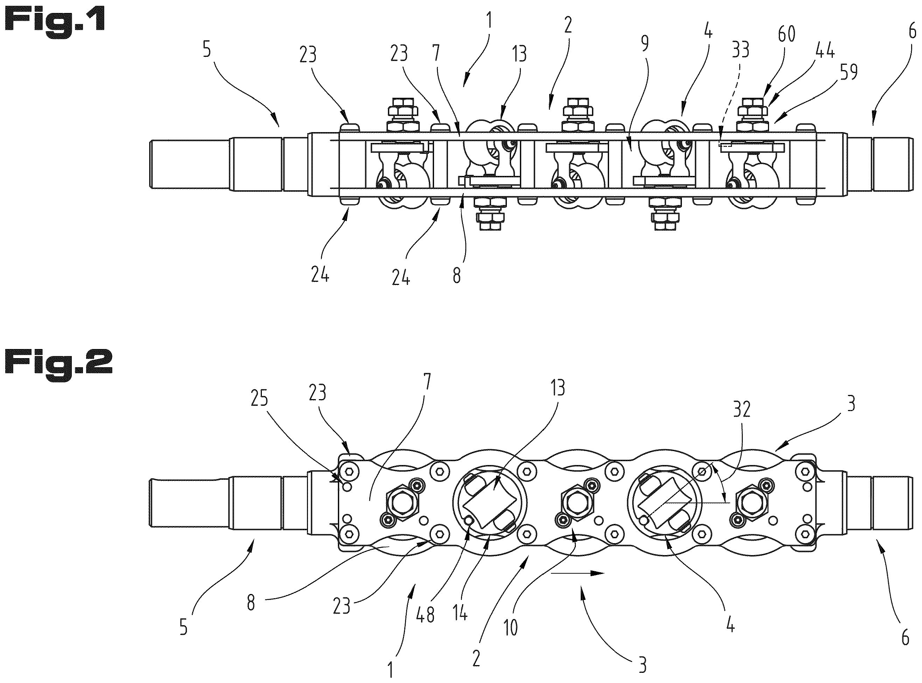

In den Fig. 1 bis 8 ist eine Ausführungsvariante eines Richtrotors 1 bzw. von Bestandteilen davon in verschiedenen Ansichten dargestellt. Der Richtrotor 1 dient dem Richten von Draht, wie beispielswiese zur Herstellung von Bewehrungen für Beton. Da derartige Richtrotoren an sich aus dem Stand der Technik bekannt sind, wird hinsichtlich weiterer, im Folgenden nicht beschriebener Merkmale des Richtrotors 1 auf den einschlägigen Stand der Technik dazu verwiesen.

Der Draht kann beispielsweise einen Durchmesser zwischen 4 mm und 24 mm aufweisen. Diese Angaben sollen nur der Verdeutlichung dienen und nicht einschränkend verstanden werden. Der Draht kann auch dicker sein.

Der Richtrotor 1 weist ein drehbar lagerbares, d.h. in einer Richtmaschine drehbar gelagertes, Rotorgehäuse 2 auf, in dem in einer Vorschubrichtung 3 des Drahtes mehrere Richtelementeinheiten 4, beispielsweise zwischen drei und zehn, insbesondere zwischen drei und fünf, Richtelementeinheiten 4, hintereinander und zueinander beabstandet angeordnet sind. Weiter weist der Richtrotor 1 ein Rotoreinlaufelement 5, durch das der zu richtende Draht dem Richtrotor 1 zugeführt wird, und ein Rotorauslaufelement 6, durch das der gerichtete Draht aus dem Richtrotor 1 austritt, auf. Der Richtrotor 1 kann auch aus den genannten Bestandteilen bestehen.

Das Rotorgehäuse 2 weist eine erste Rotorplatte 7 (auch als erste Gehäuseplatte bezeichenbar), eine zweite Rotorplatte 8 (auch als zweite Gehäuseplatte bezeichenbar) sowie mehrere Distanzelemente 9 zur voneinander distanzierten Anordnung der ersten und der zweiten Rotorplatte 7, 8 auf bzw. besteht daraus.

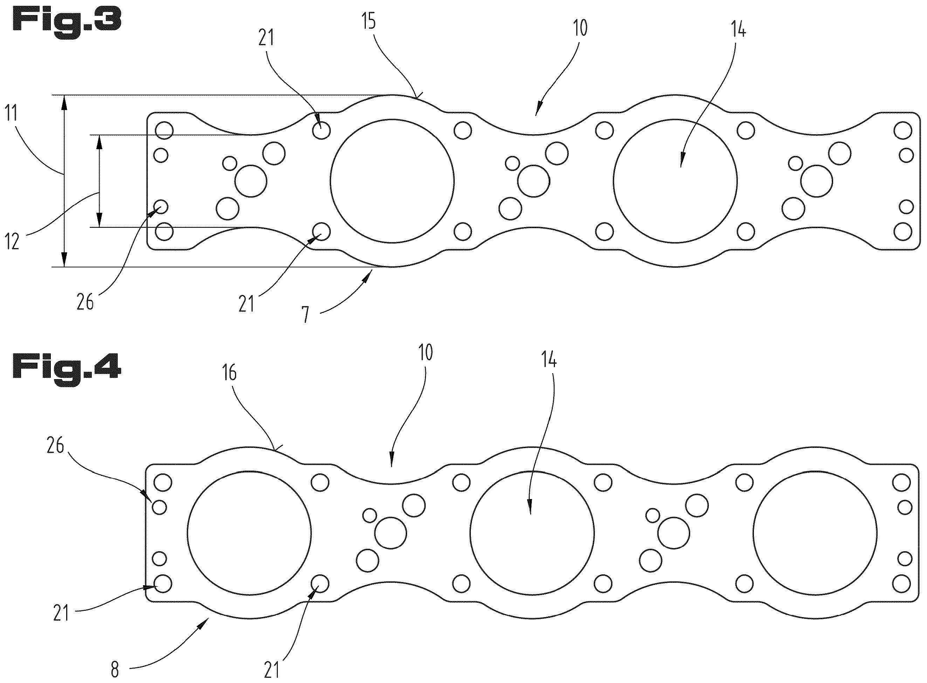

Im einfachsten Fall können die erste und/oder die zweite Rotorplatte 7, 8 quaderförmig ausgebildet sein. Vorzugsweise sind die erste und/oder die zweite Rotorplatte 7, 8 gewichtsreduziert ausgebildet. So kann nach einer Ausführungsvariante vorgesehen sein, dass die erste und/oder die zweite Rotorplatte 7, 8 in Befestigungsabschnitten 10, in denen die Richtelementeinheiten 5 befestigt sind, eine im Vergleich zu einer maximalen Breite 11 kleinere Breite 12 (jeweils in Draufsicht auf die Rotorplatte 7 bzw. 8 betrachtet) aufweisen. Wie aus den Fig. 3 und 4 zu ersehen ist, weist die erste Rotorplatte 7 drei und die zweite Rotorplatte 8 zwei Befestigungsabschnitte 10 auf. Dies ergibt sich daraus, dass die Richtelementeinheiten 4 in der Vorschubrichtung 3 abwechselnd an der ersten und der zweiten Rotorplatte 7, 8 befestigt sind. Somit ergibt sich bei einer Gesamtanzahl von fünf Richtelementeinheiten 4 diese Aufteilung der Befestigungsabschnitte 10, da die Richtelementeinheiten 4 in der bevorzugten Ausführungsvariante der Erfindung entweder nur mit der ersten oder nur mit der zweiten Rotorplatte 7, 8 verbunden sind. Es sei jedoch noch einmal darauf hingewiesen, dass die in den Figuren dargestellte Anzahl an Richtelementeinheiten 4 für die Erfindung nicht beschränkend ist.

Weiter kann nach anderen Ausführungsvarianten auch vorgesehen sein, dass die Richtelementeinheiten 4 sowohl mit der ersten als auch mit der zweiten Rotorplatte 7, 8 verbunden sind. Insbesondere trifft dies auf Richtelementeinheiten 4 zu, die als Richtelemente 13 Richtdüsen oder Richtsteine aufweisen. Diese Ausführung kann aber auch bei durch Richtrollen gebildeten Richtelementen vorgesehen sein. Zudem ist auch eine Mischvariante möglich, bei der Richtelementeinheiten 4 nur mit der ersten oder nur mit der zweiten Rotorplatte 7, 8 verbunden sind, und weitere Richtelementeinheiten 4 sowohl mit der ersten als auch mit der zweiten Rotorplatte 7, 8 verbunden sind.

Das Ausmaß der Reduktion der Breite 12 in Bezug auf die maximale Breite 11 der ersten und/oder zweiten Rotorplatte 7, 8 richtet sich - neben mechanischen Anforderungen - nach der Größe und der Befestigung der Richtelementeinheiten 4. Beispielweise kann die reduzierte Breite 12 zwischen 5 % und 50 % der maximalen Breite 11 betragen.

In den Befestigungsabschnitten 10 kann/können die erste und/oder zweite Rotorplatte 7, 8 mit einer konkaven Rundung (wie dargestellt) oder mit einem eckigen, beispielsweise dreieckigen bzw. generell polygonalen, Verlauf der Längsseitenkanten zwischen Stirnflächen und Mantelflächen der ersten und zweiten Rotorplatten 7, 8 ausgebildet sein, wobei runde Formen bevorzugt werden. Die erste und/oder die zweite Rotorplatte 7, 8 kann/können auch mehrere Abschnitte mit zueinander unterschiedlichen reduzierten Breiten 11 aufweisen, wie dies ebenfalls aus den Fig. 3 und 4 ersichtlich ist.

Generell ausgedrückt kann/können die erste und/oder die zweite Rotorplatte 7, 8 eine oder mehrere Verjüngungen aufweisen, bezogen auf die maximale Breite 11 der jeweiligen Rotorplatte 7 bzw. 8.

Es kann weiter vorgesehen sein, dass die erste und/oder die zweite Rotorplatte 7, 8 im Bereich der Richtelemente 13 mit zumindest einem Durchbruch 14 versehen ist/sind (wie dies aus den Fig. 1 und 2 zu ersehen ist), insbesondere wenn die Richtelemente 13 durch Richtrollen gebildet sind. Der jeweilige Durchbruch 14 ist dabei vorzugsweise in jener Rotorplatte 7, 8 ausgebildet, mit der die jeweilige, das Richtelement 13 aufweisende, Richtelementeinheit 4 nicht direkt verbunden ist. Somit sind die Durchbrüche 14 vorzugsweise anschließend an die Befestigungsabschnitte 10 für die Richtelementeinheiten 4 in der ersten und/oder zweiten Rotorplatte 7, 8 ausgebildet, sodass pro erster und/oder zweiter Rotorplatte 7, 8 eine Abfolge an in der Vorschubrichtung 3 abwechselnd hintereinander angeordneten Befestigungsabschnitten 10 und Durchbrüchen 14 ausgebildet sein kann.

Es sei noch einmal darauf hingewiesen, dass die in den Figuren dargestellte Anzahl an Durchbrüchen 14 nicht beschränkend zu verstehen ist, sondern sich nach der Anzahl an Richtelementeinheiten 4 im Richtrotor 1 richtet.

Die Durchbrüche 14 können kreisrund ausgebildet sein, wie dies in den Fig. 3 und 4 dargestellt ist. Sie können aber auch eine andere Form aufweisen, beispielsweise eine elliptische oder eine viereckige oder eine sechseckige oder eine achteckige bzw. generell eine polygonale Form.

Derartige Durchbrüche 14 können auch bei Ausführungsvarianten des Richtrotors 1 ausgebildet sein, bei denen die Richtelementeinheiten 4 direkt mit beiden Rotorplatten 7, 8 verbunden sind.

Zu den Durchbrüchen 14 sei angemerkt, dass es sich dabei um solche Durchbrüche 14 in den Rotorplatten 7, 8 handelt, die nicht der Befestigung der Richtelementeinheiten 4 dienen, also beispielsweise keine Durchbrüche sind, die zur Aufnahme von Befestigungsmitteln, wie z.B. Schrauben, vorgesehen sind.

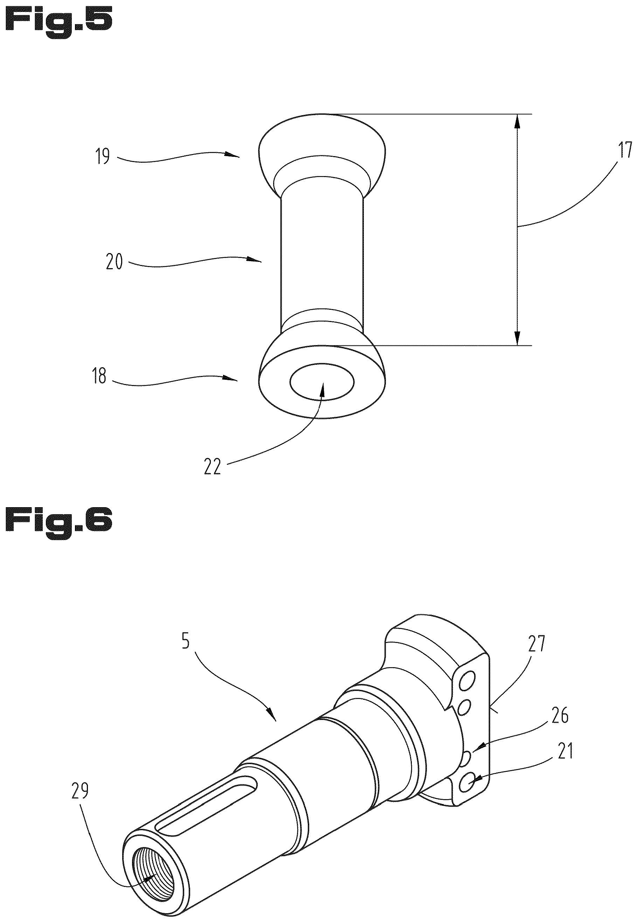

Aufgrund der Ausbildung der genannten Durchbrüche 14 in der ersten und/oder zweiten Rotorplatte 7, 8 wird nicht nur Material durch die Ausbildung der Durchbrüche 14 selbst eingespart und damit das Gewicht des Richtrotors 1 reduziert. Es kann damit nach einer weiteren Ausführungsvariante des Richtrotors 1 vorgesehen werden, dass die Richtelemente 13 über eine äußere Oberfläche 15 der ersten Rotorplatte 7 oder eine äußere Oberfläche 16 der zweiten Rotorplatte 8 vorragend ausgebildet sind. Damit kann eine Höhe 17 der Distanzelemente 9 (in Fig. 5 dargestellt, auch als Längserstreckung der Distanzelemente 9 bezeichenbar) reduziert werden, womit ebenfalls das Gewicht des Richtrotors 1 reduziert werden kann.

Die Distanzelemente 9 sind säulenförmig ausgebildet, sind also Distanzsäulen. Die Distanzelemente 9 können auch eine andere Form aufweisen, beispielsweise als Profilelemente ausgebildet sein, z.B. in Form von abgewinkelten Blechelementen, die sich nur über einen Teilbereich der gesamten Breite und einen Teilbereich der gesamten Länge des Richtrotors 1 erstrecken. Generell sind Formen bevorzugt, die sich nur über einen Teilbereich der gesamten Breite und einen Teilbereich der gesamten Länge des Richtrotors 1 erstrecken. Der Teilbereich der gesamten Breite (bezogen auf die maximale Breite 11 der ersten bzw. zweiten Rotorplatte 7, 8, vorzugsweise weisen die beiden Rotorplatten 7, 8 die gleiche maximale Breite 11 auf), kann zwischen 2 % und 30 %, insbesondere zwischen 5 % und 15 %, betragen. Der Teilbereich der gesamten Länge (bezogen auf die maximale Länge der ersten bzw. zweiten Rotorplatte 7, 8 in der Vorschubrichtung 3, vorzugsweise weisen die beiden Rotorplatten 7, 8 die gleiche maximale Länge auf), kann zwischen 1 % und 20 %, insbesondere zwischen 1 % und 10 %, betragen.

Die Anzahl an Distanzelementen 9 richtet sich nach der georderten mechanischen Stabilität des Richtrotors 1. Beispielsweise können pro Richtelementeinheit 4 vier Distanzelemente 9 vorgesehen sein, die z.B. an den Eckpunkten eines Quadrates oder Rechteckes angeordnet sein können, wie dies aus den Figuren 1 bis 4 ersichtlich ist. Es ist damit auch eine präzisiere Einstellbarkeit bzw. Halterung der Richtelementeinheiten 4 möglich. Es kann aber auch eine andere Anzahl an Distanzelementen 9 pro Richtelementeinheit 4 vorgesehen werden, beispielsweise zwischen zwei und acht Distanzelemente 9 pro Richtelementeinheit 4.

Die Distanzelemente 9 können eine dreieckige, quadratische, rechteckige, sechseckige, achteckige, polygonale, kreisrunde, ovale, etc., Form der Querschnittsfläche aufweisen. Sie können also beispielsweise quaderförmig oder zylinderförmig ausgebildet sein. Wie ausgeführt, können sie auch durch Profilelemente, wie beispielsweise Winkelprofilelemente, gebildet sein. Nach einer Ausführungsvariante dazu können die Distanzelemente 9 über ihre Höhe auch eine oder mehrere Verjüngen aufweisen. Insbesondere kann dabei vorgesehen sein, dass die Distanzelemente 9 einen ersten Endabschnitt 18, einen zweiten Endabschnitt 19 und einen Mittenabschnitt 20, der zwischen den und unmittelbar anschließend an den ersten und zweiten Endabschnitt 18, 19 angeordnet ist, aufweisen, wobei eine Querschnittsfläche des Mittenabschnittes 20 kleiner ist als eine Querschnittsfläche des ersten Endabschnitts 18 und/oder eine Querschnittsfläche des zweiten Endabschnitts 19, wie dies in Fig. 5 dargestellt ist. Mit dieser Ausführung kann erreicht werden, dass die Distanzelemente 9 eine größere Anlagefläche an der ersten und zweiten Rotorplatte 7, 8 aufweisen, dabei aber durch die schmälere Ausbildung im Mittenabschnitt 20 Gewicht eingespart werden kann. Die Querschnittsfläche des Mittenabschnitts 20 kann beispielsweise um 2 % bis 45 %, insbesondere um 5 % bis 35 %, kleiner sein als die Querschnittsfläche des ersten Endabschnittes 18 bzw. des zweiten Endabschnittes 19.

Der Übergang zwischen den ersten Endabschnitt 18 und dem Mittenabschnitt 20 und/oder zwischen dem zweiten Endabschnitt 19 und dem Mittenabschnitt 20 kann rund und insbesondere stetig, oder eckig und beispielsweise in Form von Sprüngen ausgebildet sein. Vorzugsweise sind die Distanzelemente 9 symmetrisch ausgebildet. Sie können aber auch asymmetrisch ausgebildet sein.

Die Distanzelemente 9 weisen vorzugsweise keine Fasen (an den Übergängen zu den Stirnflächen) auf, um damit die stabilisierende Wirkung zu verbessern.

Die Distanzelemente 9 können beispielsweise an der breitesten Stelle einen Durchmesser zwischen 12 mm und 25 mm und/oder an der schmälsten Stelle einen Durchmesser zwischen 9 mm und 15 mm aufweisen. Zylinderförmige Distanzelemente 9 können einen Durchmesser zwischen 8 mm und 20 mm, insbesondere zwischen 10 mm und 16 mm, aufweisen. Im Falle von polygonalen Querschnittsformen ist dies der Durchmesser des kleinsten Hüllkreises der Querschnittsfläche.

Vorzugsweise sind die Distanzelemente 9 einstückig ausgebildet und erstrecken sich zwischen den beiden Rotorplatten 7, 8, an denen sie vorzugsweise direkt anliegen.

Zur Verbindung der Distanzelemente 9 mit der ersten und der zweiten Rotorplatte 7, 8 können in der ersten und der zweiten Rotorplatte 7, 8 Bohrungen 21 vorgesehen sein, in denen Schrauben aufgenommen werden können, die mit Innengewinden der Distanzelemente 9 zusammenwirken. Es kann also pro Endabschnitt 19, 20 der Distanzelemente 9 eine Schraube vorgesehen werden.

In der bevorzugten Ausführungsvariante sind die Distanzelemente 9 hülsenförmig ausgebildet, weisen also eine in Richtung der Höhe 17 durchgehende Bohrung 22 auf. Auch in dieser Ausführung können die Distanzelement 9 mit jeweils zwei Schrauben mit der ersten und der zweiten Rotorplatte 7, 8 verbunden sein.

Vorzugsweise ist die Bohrung 22 jedoch von einer glatten Fläche begrenzt, weist also kein Gewinde auf. Befestigungselemente, wie beispielsweise Schrauben 23, erstrecken sich dabei durchgehend durch die Distanzelemente 9 und greifen z.B. in Schraubenmuttern 24 ein. Die Schraubenköpfe und die Schraubenmuttern 24 liegen an den äußeren Oberflächen 15, 16 der Rotorplatten 7, 8 an, insbesondere unmittelbar oder unter Zwischenanordnung von Beilagscheiben oder Sicherungsrungen, etc.

Wie aus den Fig. 1 und 2 zu ersehen ist, liegen die erste und die zweite Rotorplatte 7, 8 an dem Rotoreinlaufelement 5 und dem Rotorauslaufelement 6 an, insbesondere unmittelbar, und sind damit verbunden, beispielsweise über Schrauben, insbesondere wiederum durchgängige Schrauben 23 mit den Schraubenmuttern 24. Gegebenenfalls kann zusätzlich auch eine Verstiftung mit Stiften 25 (auch als Passstifte bezeichenbar) vorgesehen sein, wozu die Rotorplatten 7, 8 entsprechende Bohrungen 26 aufweisen können. Das Rotoreinlaufelement 5 und das Rotorauslaufelement 6 bilden in den Endbereichen der Rotorplatten 7, 8 somit ebenfalls Distanzelemente.

Zur besseren Anlage der Rotorplatten 7, 8 an dem Rotoreinlaufelement 5 und dem Rotorauslaufelement 6 können diese mit abgeflachten Anlageflächen 27, 28 ausgebildet sein. Die erste und die zweite Rotorplatte 7, 8 sind also bevorzugt überlappend mit dem Rotoreinlaufelement 5 und dem Rotorauslaufelement 6 angeordnet.

Bevorzugt sind die erste und/oder die zweite Rotorplatte 7, 8 ausschließlich kraft- und/oder reibschlüssig sowie gegebenenfalls formschlüssig mit dem Rotoreinlaufelement 5 und dem Rotorauslaufelement 6 und den Distanzelementen 9 verbunden. Es besteht aber auch die Möglichkeit einer stoffschlüssigen Verbindung, wenngleich dies nicht bevorzugt wird.

Das Rotoreinlaufelement 5 und das Rotorauslaufelement 6 bilden auch die Lagerflächen für die drehbare Lagerung des Richtrotors 1. Dazu können das Rotoreinlaufelement 5 und das Rotorauslaufelement 6 in Lagerböcken einer Richtmaschine aufgenommen sein.

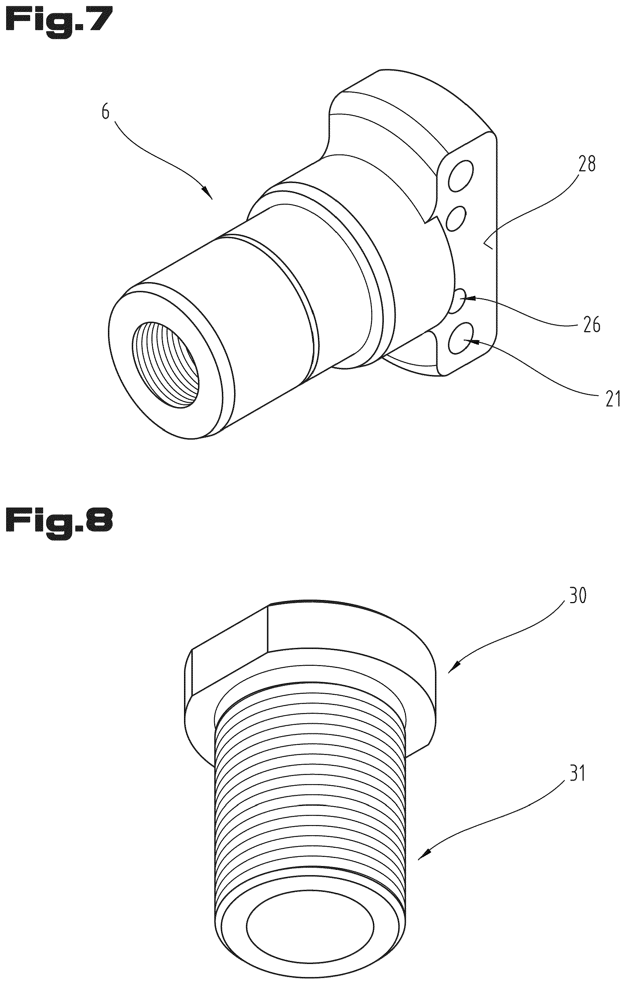

Wie aus Fig. 6 zu ersehen ist, kann das Rotoreinlaufelement 5 in einem Endabschnitt, in dem der zu richtende Draht in den Richtrotor 1 einläuft (üblicherweise von einem Coil abgewickelt), mit einem Innengewinde 29 versehen sein. Dieses dient der Aufnahme einer Einlaufbuchse 30, d.h. eines Außengewindes 31 der Einlaufbuchse 30, wie sie beispielsweise aus Fig. 8 zu ersehen ist. Die Einlaufbuchse 30 weist eine glatte innere Oberfläche auf. Mit der Einlaufbuchse 30 kann der Richtrotor 1 an unterschiedliche Drahtstärken angepasst werden. Im Betrieb dreht sich der Richtrotor 1 wodurch der zu richtende Draht durch den Richtrotor 1 gezogen wird. Mit einer entsprechenden Zustellung der Richtelemente 13 wird der Draht mehrfach überbogen und damit in der Folge gerichtet. Mit dem Richtrotor 1 nach der Erfindung sind beispielswies Drehgeschwindigkeiten zwischen 4000 U/min und 6000 U/min bzw. zwischen 4000 U/min und 10000 U/min möglich. Der Antrieb für die Drehbewegung des Richtrotors 1 kann dem Stand der Technik entsprechend ausgebildet sein. Beispielsweise kann ein Elektromotor hierfür eingesetzt werden, der gegebenenfalls über einen Zahnradtrieb oder einen Riementrieb mit dem Richtrotor 1 wirkungsverbunden ist.

Wie bereits ausgeführt, können die Richtelemente 13 Richtdüsen oder Richtsteine sein. Derartige Richtelemente 13 sind aus dem Stand der Technik bekannt. In der bevorzugten Ausführungsvariante sind die Richtelemente 13 jedoch Richtrollen, wie dies aus den Fig. 1 und 2 zu ersehen ist. Die Richtrollen können als gerade Rollen (zylinderförmige Rollen) oder hyberpolische Rollen, etc., ausgebildet sein. Möglich sind auch tonnenförmige Rollen, wenngleich dies nicht bevorzugt ist.

Vorzugsweise weisen die Richtelementeinheiten 4 jeweils ausschließlich nur ein Richtelement 13 in Form einer Richtrolle auf.

Es ist weiter bevorzugt, dass die Richtrollen schräg zur Durchlaufrichtung, d.h. zur Vorschubrichtung 3, des Drahtes angeordnet sind, wie dies aus den Fig. 1 und 2 ersehen werden kann. Ein Winkel 32, den eine Senkrechte auf die Längsachse der Richtrollen zur Vorschubrichtung 3 einnimmt, kann zwischen 30 ° und 50 °, insbesondere 40 °, betragen. Durch die Schrägstellung in diesem Winkelbereich wird die Vorschubgeschwindigkeit des Drahtes entsprechend verbessert.

Insbesondere sind in der Vorschubrichtung 3 aufeinanderfolgende Richtrollen jeweils mit den Komplementärwinkeln schräg gestellt, wie dies aus den Fig. 1 und 2 ersichtlich ist.

Es kann nach einer anderen Ausführungsvariante des Richtrotors 1 auch vorgesehen sein, dass zwischen der ersten Rotorplatte 7 oder der zweiten Rotorplatte 8 und zumindest einer der Richtelementeinheiten 4 zumindest ein Wuchtgewicht 33 angeordnet ist, wie dies in Fig. 1 angedeutet ist. Der Richtrotor 1 kann jedoch auch ohne derartige Wuchtgewichte 33 betrieben werden.

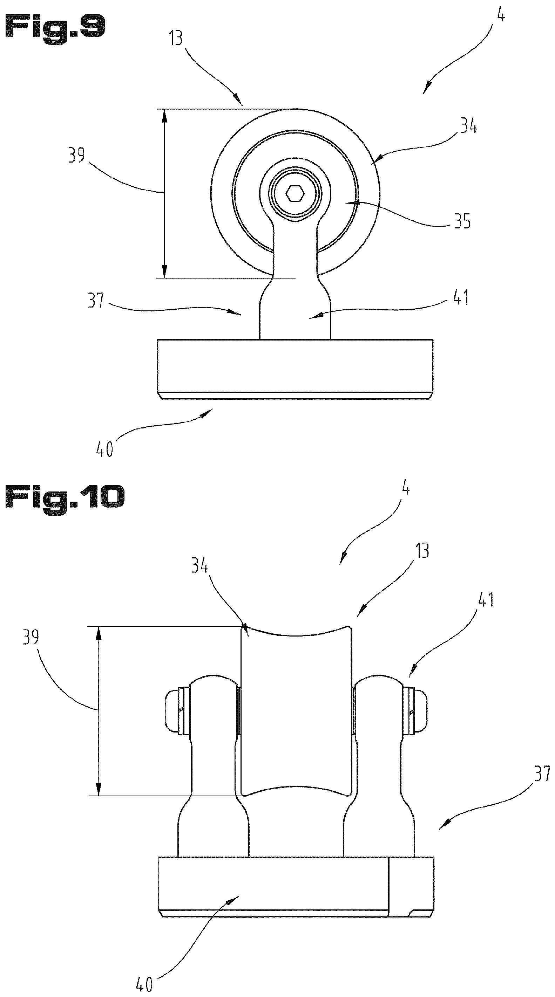

Die Fig. 9 bis 11 zeigen eine bevorzugte Ausführungsvariante der Richtelementeinheit 4, wie sie insbesondere zusammen mit dem Rotorgehäuse im Richtrotor 1 eingesetzt werden kann.

Die Richtelementeinheit 4 umfasst ein Richtelement 13 in Form einer Richtrolle 34. Die Richtrolle 34 ist über zumindest ein Lagerelement 35 drehbar gelagert. Das Lagerelement 35 ist vorzugsweise ein Wälzlager, insbesondere ein Kugellager, kann aber auch ein Gleitlager sein. Das Lagerelement 35 ist in einer Lageraufnahme 36 der Richtrolle 34 angeordnet. Weiter weist die Richtelementeinheit 4 eine Lagergabel 37 zur Abstützung einer Lagerachse 38 auf. Die Richtrolle 34 ist auf der Lagerachse 38 drehbar angeordnet. Die Lagerachse 38 kann sich dazu durch die Richtrolle 34 erstrecken. Die Richtelementeinheit 4 kann auch aus den genannten Bestandteilen bestehen. Sofern die Richtelementeinheit 4 in dem voranstehend beschriebenen Rotorgehäuse 2 eingesetzt wird, wird diese zwischen der ersten und der zweiten Rotorplatte 7, 8 angeordnet und mit der ersten oder zweiten Rotorplatte 7, 8 verbunden.

Es ist vorgesehen, dass das zumindest eine Lagerelement 35 ein dauergeschmiertes (lebensdauergeschmiertes) Lagerelement 35 ist. Als Schmiermittel wird dazu ein Schmierfett verwendet, das im Lagerelement 35 enthalten ist und unter normalen Betriebsbedingungen nicht aus dem Lagerelement 35 austritt. Dazu ist das Lagerelement 35 entsprechend abgedichtet. Dauergeschmierte Wälzlager sind aus dem hierfür einschlägigen Stand der Technik bekannt, sodass sich weitere Erörterungen dazu erübrigen. Deren Verwendbarkeit in der Richtelementeinheit 4 bzw. in einem Richtrotor 1 ist jedoch überraschend, da während des Richtens relativ große Kräfte auf die Lagerelemente einwirken, sodass bislang mit nachzufettenden bzw. immer wieder neu zu schmierende Lagerelementen gearbeitet wurde, auch um eine Überhitzung der Lagerelemente zu vermeiden. Überraschenderweise wurde festgestellt, dass auch ein dauergeschmiertes Lagerelement 35 eingesetzt werden kann, ohne dass die Standzeit der Richtrolle 34 verkürzt wird. Insbesondere trägt dazu auch bei, wenn die Richtelementeinheit 4 in Kombination mit dem voranstehend beschriebenen Rotorgehäuse 2 verwendet wird.

Von Vorteil für die Standzeit der Richtrolle 34 ist dabei auch, wenn die Richtrolle 34 nach einer Ausführungsvariante der Richtelementeinheit 4 einen Außendurchmesser 39 von maximal 70 mm, insbesondere zwischen 25 mm und 65 mm, beispielsweise zwischen 38 mm und 62 mm, aufweist. Der Außendurchmesser 39 ist dabei der kleinste Durchmesser, den die äußere Mantelfläche der Richtrolle 34 aufweist. Der Durchmesser der Rolle wird also an der engsten Stelle bezeichnet, die auch für die Drehgeschwindigkeit der Richtrolle 34 verantwortlich ist. Der Außendurchmesser 39 kann in Abhängigkeit vom Drahtdurchmesser gewählt werden. Beispielsweise kann der Außendurchmesser 39 bei einem Drahtdurchmesser von 6 mm bis 12 mm 38 mm oder bei einem Drahtdurchmesser von 12 mm bis 14 mm 42 mm oder bei einem Drahtdurchmesser von 14 mm bis 16 mm 54 mm bis 56 oder bis 62 mm betragen.

Die Lagergabel 37 kann einteilig ausgebildet sein. In der bevorzugten Ausführungsvariante ist die Lagergabel 37 jedoch mehrteilig ausgebildet, insbesondere umfassend ein Fußelement 40 und zwei säulenförmige Augenschrauben oder Augenmuttern 41, die mit dem Fußelement 40 über Befestigungsmittel verbunden sind bzw. besteht daraus.

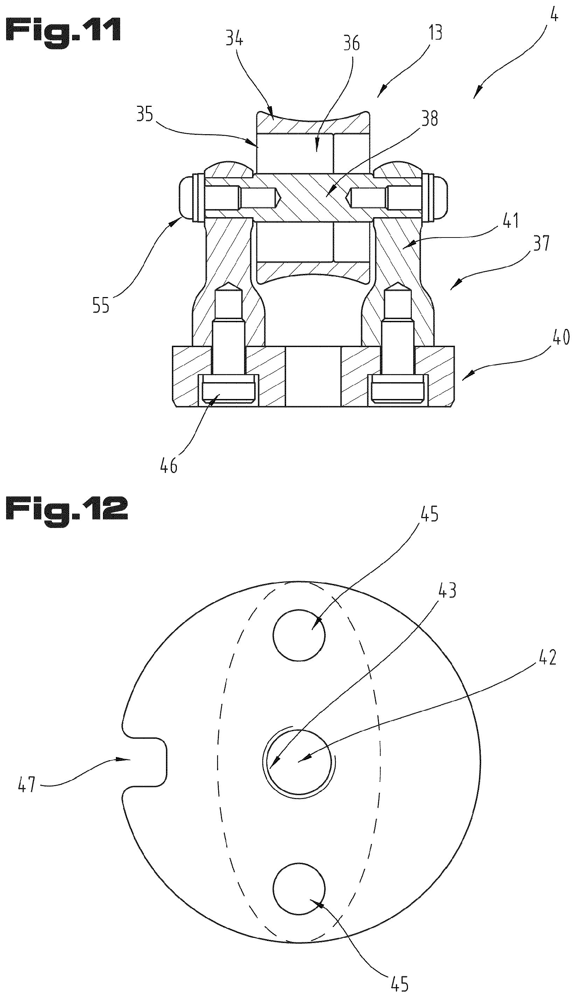

Eine Ausführungsvariante eines Fußelementes 40 ist in Fig. 12 dargestellt. Dieses Fußelement 40 ist plattenförmig als Fußplatte ausgebildet. Es weist einen kreisrunden Querschnitt auf. Das Fußelement 40 kann aber auch eine andere Form aufweisen, beispielsweise eine elliptische bzw. ovalen Querschnittsfläche bzw. Stirnfläche, wie dies in Fig. 12 strichliert angedeutet ist, oder eine dreieckige, viereckige, sechseckige, achteckige, bzw. generell polygonale Querschnittsfläche bzw. Stirnfläche.

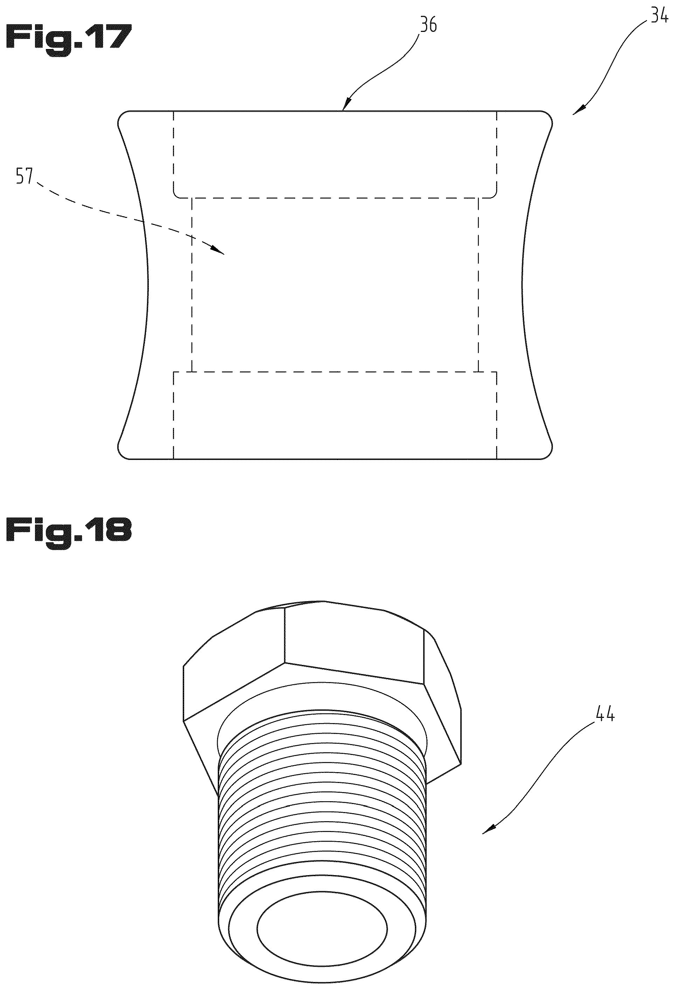

Die Richtelementeinheit 4 wird über das Fußelement 40 mit dem Rotorgehäuse 2 verbunden, also insbesondere mit der ersten oder der zweiten Rotorplatte 7, 8. Für die lösbare Verbindung mit dem Rotorgehäuse 2 weist das Fußelement 40 zumindest einen Durchbruch 42 (insbesondere Bohrung) auf, der insbesondere zentrisch angeordnet ist. Der Durchbruch 42 ist vorzugsweise mit einem Innengewinde versehen, in das ein Befestigungselement, insbesondere zusammenwirkend mit einem Höheneinstellelement 44 (siehe Fig. 18), eingedreht wird.

Das Fußelement 40 weist zudem zwei weitere Durchbrüche 45 für die Verbindung mit den Augenmuttern 41 oder Augenschrauben auf. Im Falle von Augenschrauben werden diese in ein Innengewinde der Durchbrüche 45 eingeschraubt. Im Falle von Augenmuttern 41 erfolgt die Verbindung über, insbesondere versenkte, Schrauben 46, die in ein Innengewinde der Augenmuttern 41 eingeschraubt werden, wie dies aus Fig. 11 ersichtlich ist.

Das Fußelement 40 kann nach einer Ausführungsvariante auch zumindest eine Ausnehmung 47 aufweisen, in der ein Stift 48 (siehe Fig. 2) teilweise aufgenommen werden kann, der sich von der ersten oder zweiten Rotorplatte 7, 8 bzw. dem Rotorgehäuse 2 in Richtung auf das Fußelement 40 erstreckt. Die Ausnehmung 47 erstreckt sich dabei in der Axialrichtung durchgehend durch das Fußelement 40 und in der Radialrichtung am äußeren Umfang des Fußelementes 40 beginnend nach innen. Mit dem Stift 48 kann die Stellung der Achse der Richtrolle 34 zur Vorschubrichtung 3 bestimmt bzw. eingestellt werden.

Nach einer anderen Ausführungsvariante der Erfindung kann vorgesehen sein, dass der Winkel der Schrägstellung der Achsen der Richtrolle 34 ausschließlich über Schrauben festgelegt wird. Es kann also auf den Stift 48 verzichtet werden. Die Winkelfestlegung kann durch Verringerung der Toleranzen in diesem Bereich, insbesondere der Befestigung des Fußelementes 40 (durch Abstimmung der Durchbrüche für die Schrauben zur Befestigung des Fußelements 40 in den Rotorplatten 7, 8 auf die Schrauben, insbesondere Inbusschrauben) ermöglicht werden. Es ist damit auch eine kompakter Bauweise des Richtrotors 1 möglich.

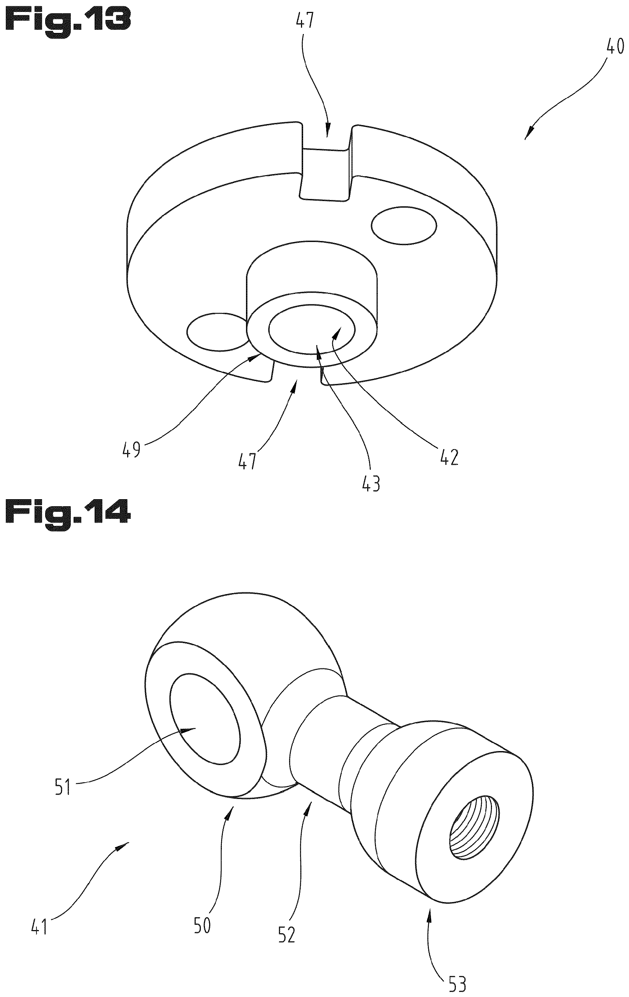

Wie aus der Fig. 13 zu ersehen ist, die eine andere Ausführungsvariante des Fußelementes 40 zeigt, kann dieses auch mehr als eine derartige Ausnehmung 47 aufweisen. Weiter kann im Bereich des zentrischen Durchbruchs 42 ein domförmiger Fortsatz 49 vorgesehen sein, der in einer entsprechenden Ausnehmung im Rotorgehäuse 2, insbesondere der ersten oder zweiten Rotorplatte 7, 8, aufgenommen werden kann. Es ist damit möglich die axiale Länge des Innengewindes 43 zu erhöhen bzw. eine bessere bzw. mechanisch stabilere Anlage des Fußelementes 40 am Rotorgehäuse 2 zu schaffen.

In Fig. 14 ist eine Ausführungsvariante einer Augenmutter 41 gezeigt. Die Augenmutter 41 weist einen ersten verbreiterten Endabschnitt 50 mit einem Durchbruch 51 zur Aufnahme der Lageachse 38 auf. Weiter weist die Augenmutter einen verjüngten Mittenabschnitt 52 und einen im Vergleich dazu verbreiterten Fußabschnitt 53 auf.

Mit dem verbreiterten Fußabschnitt 53 kann die Anbindung der Augenmutter 41 (bzw. der Augenschraube) am Fußelement 40 verbessert werden. Durch den verjüngten Mittenabschnitt 52 kann die Richtrolle 34 näher an der Augenmutter 42 (bzw. der Augenschraube) angeordnet werden, wie dies insbesondere aus Fig. 11 ersichtlich ist. Dabei ist von Vorteil, wenn der Endabschnitt 50 der Augenmutter 41 (bzw. der Augenschraube) nicht oder nicht wesentlich breiter ist als der Mittenabschnitt 52 (auf die Richtung der Lagerachse 38 bezogen).

Die Länge des Mittenabschnittes 52 kann an den Durchmesser der Richtrolle 34 entsprechend angepasst werden.

Anstelle der Augenmutter 41 bzw. der Augenschraube können die Schenkel der Lagergabel 37 auch anders ausgeführt sein, beispielsweise in Form von dreieckförmigen oder viereckförmigen (plattenförmigen) Seitenwangen, die mit dem Fußelement 40 verbunden werden und die Lagerachse 38 halten.

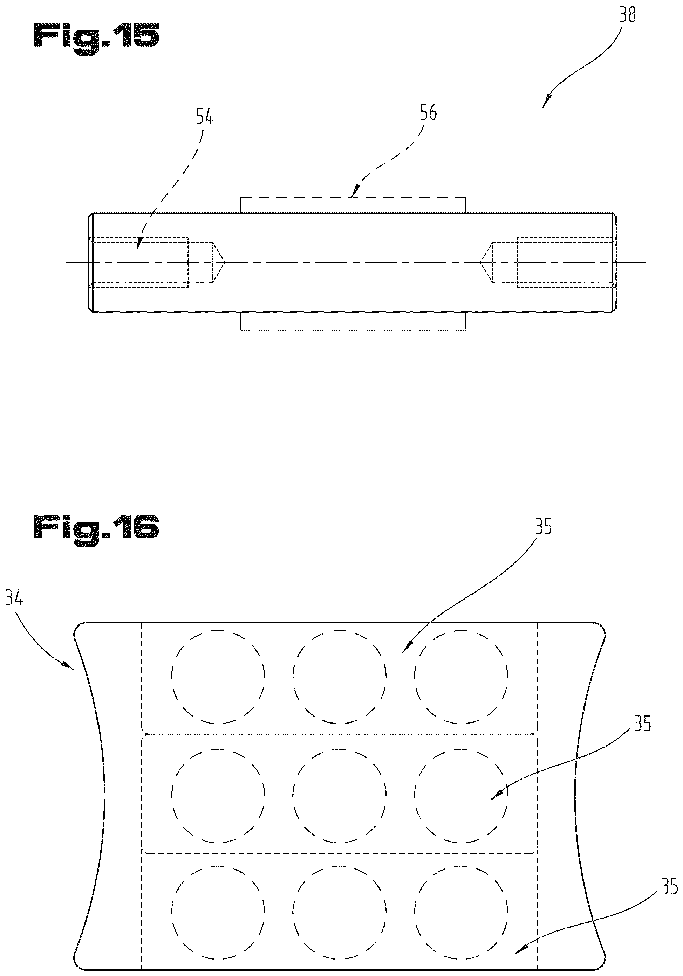

In Fig. 15 ist eine Ausführungsvariante einer Lagerachse 38 dargestellt. Diese kann zylinderförmig ausgebildet sein, mit jeweils eine Bohrung 54 mit Innengewinde zur Aufnahme einer Schraube 55 (siehe Fig. 11), mit der die Lagerachse 38 mit der Augenmutter 41 bzw. der Augenschraube bzw. generell dem Schenkel der Lagergabel 37 verbunden wird. Gegebenenfalls kann die Lagerachse 38 einen Mittenabschnitt 56 mit größerem Durchmesser (verglichen mit den daran anschließenden Endabschnitten) aufweisen (in Fig. 15 strichliert dargestellt), in dem das zumindest eine Lagerelement 35 angeordnet wird.

Nach einer weiteren Ausführungsvariante der Richtelementeinheit 4 kann vorgesehen sein, dass zwischen der Richtrolle 34 und der Lagerachse 38 mehr als ein Lagerelement 35 angeordnet ist, insbesondere zwei oder drei Lagerelemente 35, wie dies aus Fig. 16 ersichtlich ist. Diese Lagerelemente 35 sind in der Axialrichtung durch die Richtrolle 34 hintereinander angeordnet. Dabei können jeweils zwei der Lagerelemente 35 unmittelbar aneinander anliegen. Nach einer anderen Ausführungsvariante kann aber zwischen zumindest zwei Lagerelementen 35 ein, insbesondere in Umfangrichtung durchgängig umlaufender, Ringsteg 57 (auch als Bart bezeichenbar) angeordnet sein. Der Ringsteg 57 erstreckt sich dabei in der Lageraufnahme 36 der Richtrolle 34 von einer Lageraufnahmefläche 58 in radialer Richtung nach innen und ragt somit über die Lageraufnahmefläche 58 vor. Es ist möglich, dass der Ringsteg 57 derart platziert bzw. ausgebildet ist, dass er eine Aneinanderreihung von Lagerelementen 35 ohne Abstand ermöglicht.

Die axiale Breite des Ringsteges 57 kann entsprechend angepasst werden. Gegebenenfalls kann der Ringsteg 57 so breit sein, dass er als Anlagefläche, d.h. als weiter Lageraufnahmefläche für ein Lagerelement 35 mit kleinerem Durchmesser dient.

Weiter kann vorgesehen sein, dass der Ringsteg 57 mittig oder außermittig in der Lageraufname 36 der Richtrolle 34 angeordnet ist.

Der Ringsteg 57 ist vorzugsweise einstückig mit der Richtrolle 34 ausgebildet.

Nach einer weiteren Ausführungsvariante der Richtelementeinheit 4 kann vorgesehen sein, dass zumindest ein Lagerelement 35 in der Axialrichtung über die Richtrolle 34 vorragend angeordnet ist (siehe Fig. 11). Es ist damit möglich, den Fußabschnitt 53 der Augenmutter 41 bzw. der Augenschraube breiter auszuführen. Damit kann die Richtelementeinheit 4 auch enger gebaut werden, womit das Gewicht der Richtelementeinheit reduziert werden kann. Dies wiederum hat positive Auswirkungen auf die Massenträgheit des Richtrotors 1.

Nur der Vollständigkeit halber sei angemerkt, dass die Richtrolle 34 vorzugsweise aus einem Stahl besteht.

In Fig. 18 ist das Höheneinstellelement 44 (auch als Dressierhülse bezeichenbar) dargestellt. Wie insbesondere aus Fig. 1 ersichtlich ist, wird das Höheneinstellelement 44 nach der Einstellung der Höhenlage der Richtrolle 34 in Bezug auf den zu richtenden Draht mit einer Kontermutter 59 (aus als Gegenmutter bezeichenbar gegen das Rotorgehäuse 2 verspannt. Durch das Höheneinstellelement 33 hindurch erstreckt sich ein Befestigungselement, insbesondere eine Schraube 60, die in das Fußelement 40 der Lagergabel 37 eingeschraubt wird und gegen das Höheneinstellelement 44 gespannt wird. Die Gesamtlänge des Höheneinstellelementes 44 in dessen Axialrichtung kann vorzugsweise so gewählt werden, dass bei vollständig eingeschraubtem Höheneinstellelement 44 eine Nullstellung (Draht berührt das Richtelement 13, insbesondere die Richtrolle 34, nur ohne Überbiegung) erreicht wird. Es kann damit die Einstellung der richtigen Höhe vereinfacht werden.

Die Höheneinstellung der Richtrolle 34 kann aber auch anders ausgeführt sein.

Der voranstehend beschriebene Richtrotor 1 und/oder die Richtelementeinheit 4 kann in einer Richtmaschine für Draht (nicht dargestellt) eingesetzt werden. Die Richtmaschine kann wie bekannt auch eine Ablängeinrichtung aufweisen, sodass auch Stäbe, insbesondere Bewehrungsstäbe für Beton, hergestellt werden können.

Zur Reduktion des Schlupfes zwischen der Richtrolle 34 (bzw. generell dem Richtelement 13) und dem Draht, kann zumindest auf der mit dem Draht in Kontakt stehenden Fläche des Richtelements 13, insbesondere der Mantelfläche der Richtrolle 34, eine Beschichtung, insbesondere eine PVD-Beschichtung, vorgesehen sein. Es ist damit auch möglich, einer Überhitzung des Richtelementes 13 vorzubeugen.

Die Beschichtung kann beispielswiese eine Nitrid- Beschichtung, wie z.B. TiN oder TiNbasierend, TiCN oder TiCN-basierend, TiAlN oder TiAlN-basierend, CrN oder CrNbasierend, CrCN oder CrCN-basierend, ZrN oder ZrN-basierend, Aluminiumtitan-Chromnitrid, Aluminium-Chromnitrid, AlCr-basierend, AlTiSi-basierend, ZrCN-basierend, WC-C-basierend, sein.

Die Ausführungsbeispiele zeigen bzw. beschreiben mögliche Ausführungsvarianten des Richtrotors 1, des Richtrotorgehäuses 2 und der Richtelementeinheit 4 wobei an dieser Stelle bemerkt sei, dass auch Kombinationen der einzelnen Ausführungsvarianten untereinander möglich sind. Zudem kann eine Richtrolle 34 auf zumindest einem Teil oder der gesamten äußeren, mit dem Draht in Berührung kommende Mantelfläche eine den Schlupf zwischen dem Draht und der Richtrolle 34 reduzierende Beschichtung, insbesondere eine PVD-Beschichtung, aufweisen.

Der Ordnung halber sei abschließend darauf hingewiesen, dass zum besseren Verständnis des Aufbaus des Richtrotors 1, des Richtrotorgehäuses 2 und der Richtelementeinheit 4 diese bzw. deren Bestandteile nicht zwingenderweise maßstäblich dargestellt sind.

**Bezugszeichenaufstellung**

| | | | |
|---|---|---|---|
| 1 | Richtrotor | 36 | Lageraufnahme |
| 2 | Rotorgehäuse | 37 | Lagergabel |
| 3 | Vorschubrichtung | 38 | Lagerachse |
| 4 | Richtelementeinheit | 39 | Außendurchmesser |
| 5 | Rotoreinlaufelement | 40 | Fußelement |
| 6 | Rotorauslaufelement | 41 | Augenmutter |
| 7 | Rotorplatte | 42 | Durchbruch |
| 8 | Rotorplatte | 43 | Innengewinde |
| 9 | Distanzelement | 44 | Höheneinstellelement |
| 10 | Befestigungsabschnitt | 45 | Durchbruch |
| 11 | Breite | 46 | Schraube |
| 12 | Breite | 47 | Ausnehmung |
| 13 | Richtelement | 48 | Stift |
| 14 | Durchbruch | 49 | Fortsatz |
| 15 | Oberfläche | 50 | Endabschnitt |
| 16 | Oberfläche | 51 | Durchbruch |
| 17 | Höhe | 52 | Mittenabschnitt |
| 18 | Endabschnitt | 53 | Fußabschnitt |
| 19 | Endabschnitt | 54 | Bohrung |
| 20 | Mittenabschnitt | 55 | Schraube |
| 21 | Bohrung | 56 | Mittenabschnitt |
| 22 | Bohrung | 57 | Ringsteg |
| 23 | Schraube | 58 | Lageraufnahmefläche |
| 24 | Schraubenmutter | 59 | Kontermutter |
| 25 | Stift | 60 | Schraube |
| 26 | Bohrung | | |
| 27 | Anlagefläche | | |
| 28 | Anlagefläche | | |
| 29 | Innengewinde | | |
| 30 | Einlaufbuchse | | |
| 31 | Außengewinde | | |
| 32 | Winkel | | |
| 33 | Wuchtgewicht | | |
| 34 | Richtrolle | | |
| 35 | Lagerelement | | |

## Patentansprüche

1. Richtrotor (1) zum Richten von Draht, insbesondere von Baustahldraht, umfassend ein drehbar lagerbares Rotorgehäuse (2) und mehrere in einer Vorschubrichtung (3) des Drahtes hintereinander angeordnete Richtelementeinheiten (4) mit Richtelementen (13), insbesondere Richtrollen (34), wobei das Rotorgehäuse (2) aus einer ersten Rotorplatte (7) und einer zweiten Rotorplatte (8) sowie mehreren Distanzelementen (9) zur voneinander distanzierten Anordnung der ersten und der zweiten Rotorplatte (7, 8) zusammengesetzt ist, wobei die Richtelementeinheiten (4) zumindest teilweise zwischen der ersten und der zweiten Rotorplatte (7, 8) angeordnet und damit verbunden sind, **dadurch gekennzeichnet, dass** die Distanzelemente (9) durch Distanzsäulen gebildet sind.

2. Richtrotor (1) nach Anspruch 1, **dadurch gekennzeichnet, dass** die erste und/oder die zweite Rotorplatte (7, 8) in Befestigungsabschnitten (10), in denen die Richtelementeinheiten (4) befestigt sind, eine kleinere Breite (12) aufweisen als in daran anschließenden Abschnitten.

3. Richtrotor (1) nach Anspruch 1 oder 2, **dadurch gekennzeichnet, dass** die erste und/oder die zweite Rotorplatte (7, 8) im Bereich der Richtelemente (13) mit einem Durchbruch (14) versehen sind.

4. Richtrotor (1) nach Anspruch 3, **dadurch gekennzeichnet, dass** die Richtelemente (13) über eine äußere Oberfläche der ersten oder der zweiten Rotorplatte (7, 8) vorragend ausgebildet sind.

5. Richtrotor (1) nach einem der Ansprüche 1 bis 4, **dadurch gekennzeichnet, dass** ein Winkel der Schrägstellung der Achsen der Rotorrollen (34) ausschließlich über Schrauben festgelegt wird.

6. Richtrotor (1) nach einem der Ansprüche 1 bis 5, **dadurch gekennzeichnet, dass** die Distanzelemente (9) hülsenförmig ausgebildet sind.

7. Richtrotor (1) nach Anspruch 6, **dadurch gekennzeichnet, dass** die Distanzelemente (9) mit Befestigungselementen mit der ersten und zweiten Rotorplatte (7, 8) verbunden sind, wobei sich die Befestigungselemente durchgehend durch die hülsenförmigen Distanzelemente (9) erstrecken.

8. Richtrotor (1) nach einem der Ansprüche 1 bis 7, **dadurch gekennzeichnet, dass** die Richtelementeinheiten (4) jeweils eine über zumindest ein Lagerelement (35), vorzugsweise zwei oder drei Lagerelemente (35), insbesondere Wälzlager, drehbar gelagerte Richtrolle (34) umfassen, wobei das Lagerelement (35) in einer Lageraufnahme (36) angeordnet ist, sowie eine, vorzugsweise ein Fußelement (40) und zwei säulenförmige Augenschrauben oder Augenmuttern (41), die mit dem Fußelement (40) verbunden sind, aufweisende Lagergabel (37) zur Abstützung einer Lagerachse (38), die sich durch die Richtrolle (34) erstreckt, umfassen, wobei das Lagerelement (35) ein dauergeschmiertes Lagerelement (35) ist.

9. Richtrotor (1) nach Anspruch 8, **dadurch gekennzeichnet, dass** in der Lageraufnahme (36) ein Ringsteg (57) angeordnet ist.

10. Richtrotor (1) nach Anspruch 8 oder 9, **dadurch gekennzeichnet, dass** zumindest ein Lagerelement (35) in der Axialrichtung über die Richtrolle (34) vorragend angeordnet ist.

11. Richtrotor (1) nach einem der Ansprüche 8 bis 10, **dadurch gekennzeichnet, dass** das Fußelement (40) eine Ausnehmung (47) zur Aufnahme eines Stiftes (48) aufweist, der sich bis in die erste oder die zweite Rotorplatte (7, 8) erstreckt.

12. Richtrotor (1) nach einem der Ansprüche 8 bis 11, **dadurch gekennzeichnet, dass** das Fußelement (40) als Fußplatte mit zumindest annähernd runden, elliptischen oder polygonalen Stirnflächen ausgebildet ist.

13. Richtrotor (1) nach einem der Ansprüche 8 bis 12, **dadurch gekennzeichnet, dass** eine äußere Mantelfläche der Richtrolle (34) mit einer den Schlupf zwischen dem Draht und der Mantelfläche reduzierenden Beschichtung, insbesondere einer PVD-Beschichtung, versehen ist.

14. Richtmaschine umfassend zumindest einen Richtrotor (1) mit Richtelementeinheiten (4), **dadurch gekennzeichnet, dass** der Richtrotor (1) oder die Richtrotoren (1) nach einem der Ansprüche 1 bis 13 ausgebildet ist oder sind.

## Claims

1. A Straightening rotor (1) for straightening wire, in particular structural steel wire, comprising a rotatable rotor housing (2) and several straightening element units (4) arranged in a series in a feed direction (3) of the wire with straightening elements (13), in particular straightening rollers (34), wherein the rotor housing (2) consists of a first rotor plate (7) and a second rotor plate (8) as well as several spacer elements (9) for the spaced arrangement of the first and the second rotor plate (7, 8), wherein the straightening element units (4) are at least partially arranged between the first and the second rotor plate (7, 8) and are connected to it, **characterised in that** the spacer elements (9) are formed by spacer columns.

2. The straightening rotor (1) according to claim 1, **characterized in that** the first and/or second rotor plate (7, 8) has/have a smaller width (12) in fastening sections (10) in which the straightening element units (4) are fixed than in adjacent sections.

3. The straightening rotor (1) according to claim 1 or 2, **characterized in that** the first and/or the second rotor plate (7, 8) in the area of the straightening elements (13) are provided with a breakthrough (14).

4. The straightening rotor (1) according to claim 3, **characterized in that** the straightening elements (13) project beyond an outer surface of the first or the second rotor plate (7, 8).

5. The straightening rotor (1) according to any of claims 1 to 4, **characterized in that** an angle of inclination of the axes of the straightening rollers (34) is fixed exclusively by screws.

6. The straightening rotor (1) according to any of claims 1 to 5, **characterized in that** the spacer elements (9) are sleeve-shaped.

7. The straightening rotor (1) according to claim 6, **characterized in that** the spacer elements (9) are connected to the first and second rotor plates (7, 8) by fastening elements, wherein the fastening elements extend continuously through the sleeve-shaped spacers (9).

8. The straightening rotor (1) according to any of claims 1 to 7, **characterized in that** the straightening element units (4) each comprise a straightening roller (34) which is rotatably mounted with at least one bearing element (35), preferably two or three bearing elements (35), in particular rolling bearings, wherein the bearing element (35) is arranged in a bearing holder (36), and a bearing fork (37), preferably having a foot member (40) and two column-shaped eye bolts or eye nuts (41), which are connected to the foot member (40) for supporting a bearing axle (38) extending through the straightening roller (34), wherein the bearing element (35) is a permanently lubricated bearing element (35).

9. The straightening rotor (1) according to claim 8, **characterized in that** a ring web (57) is arranged in the bearing holder (36).

10. The straightening rotor (1) according to claim 8 or 9, **characterized in that** at least one bearing element (35) protrudes in the axial direction beyond the straightening roller (34).

11. The straightening rotor (1) according to any of claims 8 to 10, **characterized in that** the foot member (40) has a recess (47) for holding a pin (48) extending into the first or the second rotor plate (7, 8).

12. The straightening rotor (1) according to any of claims 8 to 11, **characterized in that** the foot member (40) is formed as a foot plate with at least approximately round, elliptical or polygonal end faces.

13. The straightening rotor (1) according to any of claims 8 to 12, **characterized in that** an outer lateral surface of the straightening roller (34) is provided with a coating which reduces the slippage between the wire and the lateral surface, in particular a PVD coating.

14. A straightening machine comprising at least one straightening rotor (1) with straightening element units (4), **characterized in that** the straightening rotor (1) is or the straightening rotors (1) are configured according to any of claims 1 to 13.

## Revendications

1. Rotor de dressage (1) permettant de dresser du fil, en particulier du fil d'acier de construction, comprenant un carter de rotor (2) monté rotatif et plusieurs unités d'éléments de dressage (4) agencées les unes derrière les autres dans une direction d'alimentation (3) du fil et munies d'éléments de dressage (13), en particulier de rouleaux de dressage (34), dans lequel le carter de rotor (2) est composé d'une première plaque de rotor (7) et d'une deuxième plaque de rotor (8) ainsi que de plusieurs éléments d'espacement (9) permettant un agencement mutuellement espacé des première et deuxième plaques de rotor (7, 8), dans lequel les unités d'éléments de dressage (4) sont au moins partiellement agencées entre les première et deuxième plaques de rotor (7, 8) et sont reliées aux dites plaques, **caractérisé en ce que** les éléments d'espacement (9) sont formés par des colonnes d'espacement.

2. Rotor de dressage (1) selon la revendication 1, **caractérisé en ce que** la première et/ou la deuxième plaque de rotor (7, 8) présentent, dans les sections de fixation (10) au sein desquelles sont fixées les unités d'éléments de dressage (4), une largeur (12) plus petite que dans les sections adjacentes.

3. Rotor de dressage (1) selon la revendication 1 ou 2, **caractérisé en ce que** la première et/ou la deuxième plaque de rotor (7, 8) est/sont munie(s) d'un passage (14) dans la région des éléments de dressage (13).

4. Rotor de dressage (1) selon la revendication 3, **caractérisé en ce que** les éléments de dressage (13) sont réalisés de manière à faire saillie au-dessus d'une surface extérieure de la première ou de la deuxième plaque de rotor (7, 8).

5. Rotor de dressage (1) selon l'une quelconque des revendications 1 à 4, **caractérisé en ce que** l'angle de l'inclinaison des axes des rouleaux de rotor (34) est déterminé exclusivement grâce à des vis.

6. Rotor de dressage (1) selon l'une quelconque des revendications 1 à 5, **caractérisé en ce que** les éléments d'espacement (9) sont réalisés en forme de manchon.

7. Rotor de dressage (1) selon la revendication 6, **caractérisé en ce que** les éléments d'espacement (9) sont reliés aux première et deuxième plaques de rotor (7, 8) par des éléments de fixation, dans lequel les éléments de fixation s'étendent en continu à travers les éléments d'espacement (9) en forme de manchon.

8. Rotor de dressage (1) selon l'une quelconque des revendications 1 à 7, **caractérisé en ce que** les unités d'éléments de dressage (4) comprennent respectivement un rouleau de dressage (34) monté rotatif par l'intermédiaire d'au moins un élément de palier (35), de manière préférée deux ou trois éléments de palier (35), en particulier des paliers à roulement, dans lequel l'élément de palier (35) est agencé dans un logement de palier (36), et comprennent une fourche de palier (37) qui présente de manière préférée un élément formant pied (40) et deux vis à œil ou écrous à œil (41) en forme de colonne relié(e)s à l'élément formant pied (40) et qui permet de soutenir un axe de palier (38) s'étendant à travers le rouleau de dressage (34), dans lequel l'élément de palier (35) est un élément de palier (35) à graissage permanent.

9. Rotor de dressage (1) selon la revendication 8, **caractérisé en ce qu'**un segment annulaire (57) est agencé dans le logement de palier (36).

10. Rotor de dressage (1) selon la revendication 8 ou 9, **caractérisé en ce qu'**au moins un élément de palier (35) est agencé de manière à faire saillie au-dessus du rouleau de dressage (34) dans la direction axiale.

11. Rotor de dressage (1) selon l'une quelconque des revendications 8 à 10, **caractérisé en ce que** l'élément formant pied (40) présente un évidement (47) permettant d'accueillir une broche (48) qui s'étend jusque dans la première ou la deuxième plaque de rotor (7, 8).

12. Rotor de dressage (1) selon l'une quelconque des revendications 8 à 11, **caractérisé en ce que** l'élément formant pied (40) est réalisé sous la forme d'une plaque de pied munie de surfaces frontales au moins approximativement rondes, elliptiques ou polygonales.

13. Rotor de dressage (1) selon l'une quelconque des revendications 8 à 12, **caractérisé en ce qu'**une surface d'enveloppe extérieure du rouleau de dressage (34) est munie d'un revêtement, en particulier d'un revêtement PVD, réduisant le patinage entre le fil et la surface d'enveloppe.

14. Machine à dresser comprenant au moins un rotor de dressage (1) muni d'unités d'éléments de dressage (4), **caractérisée en ce que** le rotor de dressage (1) ou les rotors de dressage (1) est ou sont réalisé(s) selon l'une quelconque des revendications 1 à 13.
